(19) Europäisches Patentamt
European Patent Office
Office européen des brevets

(11) EP 1 962 363 A2

(12) **EUROPEAN PATENT APPLICATION**

(43) Date of publication:
**27.08.2008 Bulletin 2008/35**

(51) Int Cl.:
***H01M 8/24*** (2006.01) ***H01M 8/10*** (2006.01)

(21) Application number: **08101591.9**

(22) Date of filing: **13.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.02.2007 KR 20070017504**

(71) Applicant: **Samsung SDI Co., Ltd.**
**Suwon-si, Gyeonggi-do (KR)**

(72) Inventors:
- **Shin, Chan-Gyun**
  **Yeongtong-gu, Suwon-si**
  **Gyeonggi-do (KR)**
- **Suh, Jun-Won**
  **Yeongtong-gu, Suwon-si**
  **Gyeonggi-do (KR)**
- **Na, Young-Seung**
  **Yeongtong-gu, Suwon-si**
  **Gyeonggi-do (KR)**

(74) Representative: **Grey, Ian Michael et al**
**Venner Shipley LLP**
**20 Little Britain**
**London EC1A 7DH (GB)**

(54) **Fuel cell stack and fuel cell system**

(57) A fuel cell stack comprising a multitude of membrane-electrode assemblies stacked with a separator interposed therebetween is characterized in that an MEA of a first property having an anode and a cathode, and the MEA of a second property having an anode electrode and a cathode electrode are stacked. Preferably the MEA of the first property is a hydrocarbon-based MEA and the MEA of the second property is a fluorine-based MEA.

EP 1 962 363 A2

## Description

The present disclosure relates to a fuel cell stack structured by stacking a multitude of unit fuel cells, and more particularly, to a fuel cell stack with increased fuel efficiency and easily maintaining a desired reaction temperature.

Generally, a fuel cell is an electricity generating system, which directly converts chemical energy into electrical energy through an electrochemical reaction between hydrogen and oxygen. Pure hydrogen may be supplied to the fuel cell, or hydrogen derived from methanol, ethanol, natural gas, and so on, may be supplied to the fuel cell. Pure oxygen may be supplied to the fuel cell system, or the oxygen from the air, provided, for example, by an air pump, etc. may be supplied to the fuel cell system.

In the operating mechanism of the fuel cell, an electron and a hydrogen ion are formed at an anode by oxidizing a fuel, such as hydrogen, natural gas, methanol, and so on. The hydrogen ion generated at the anode moves to a cathode through an electrolyte membrane, and the electron generated at the anode is supplied to an external circuit through a wire or line. The hydrogen ion combines with the electron, which is moves to the cathode through the external circuit, and with oxygen or oxygen in the air, thereby producing water.

Fuel cells may classified as polymer electrolyte membrane fuel cells, phosphoric acid fuel cells, molten carbonate fuel cells, and solid oxide fuel cells in accordance with the kind of electrolyte used therein. Depending on the type of fuel cell, the operating temperature and materials of the constitutional part are different.

Fuel cells may also be classified into external reforming types and internal reforming types according to fuel feeding process. External reforming fuel cells convert fuel into a hydrogen-rich gas using a fuel reformer before the fuel is delivered to the anode. Internal reforming fuel cells, also known as direct fuel cells, allow a gaseous or liquid fuel to be fed directly into an anode.

A representative example of direct fuel cell is a direct methanol fuel cell (DMFC). In the direct methanol fuel cell, an aqueous methanol solution or a mixed vapor of water and methanol is supplied into the anode. Because the direct methanol fuel cell removes the need for an external reformer and has excellent fuel handling properties, it can be more easily miniaturized than other types of fuel cells.

The unit electricity-generating element of the fuel cell is a referred to as a membrane-electrode assembly (MEA). Here, the MEA has a structure in which an anode electrode (also referred to as a "fuel electrode" or an "oxidation electrode") and a cathode electrode (also referred to as an "air electrode" or a "reduction electrode") are attached to each other, with the electrolyte membrane, which is capable of transporting hydrogen ions, interposed therebetween.

The MEA electrochemical reaction involved in the direct methanol fuel cell includes an anode reaction for oxidizing fuel and a cathode reaction for reducing hydrogen ions and oxygen, as shown in EQUATION 1.

EQUATION 1

Anode electrode $$CH_3OH + H_2O \rightarrow CO_2 + 6H^+ + 6e^-$$

Cathode electrode $$\frac{3}{2} O_2 + 6H^+ + 6e^- \rightarrow 3\ H_2O$$

As shown in EQUATION 1, methanol and water react with each other to produce carbon dioxide, six hydrogen ions, and six electrons at the anode. The generated hydrogen ions move through the hydrogen ion-conductive electrolyte membrane to the cathode. At the cathode, the hydrogen ions, electrons from the external circuit, and oxygen react to produce water. The overall reaction of the direct methanol fuel cell (DMFC) is to produce water and carbon dioxide, and a large portion of the energy corresponding to the heat of combustion of methanol is converted to electrical energy. Catalysts provided at the anode and cathode promotes these reactions.

The hydrogen ion-conductive electrolyte membrane serves as a channel through which the hydrogen ions generated by the oxidation reaction at the anode can be transferred to the cathode. At the same time, the hydrogen ion-conductive electrolyte membrane serves as a separator to separate the anode and the cathode.

In a polymer electrolyte membrane fuel cell (PEMFC) and a direct methanol fuel cell (DMFC), a hydrogen ion-conductive polymer electrolyte membrane is mainly used as a hydrogen ion-conductive electrolyte membrane. In general, the hydrogen ion-conductive polymer electrolyte membrane is hydrophilic and conducts ions in the presence of an appropriate amount of water.

The membrane-electrode assembly (MEA) has a various characteristics in accordance with the kind of hydrogen ion-conductive electrolyte membrane, and sulfonated tetrafluorethylene copolymer (Nafion®, DuPont)based electrolyte membrane and hydrocarbon-based polymer electrolyte membrane are widely used in direct methanol fuel cells.

A membrane-electrode assembly Nafion-based using a Nafion®-based electrolyte membrane (hereinafter, referred as a Nafion-based MEA) and a membrane-electrode assembly hydrocarbon-based using a hydrocarbon-based polymer electrolyte membrane (hereinafter, referred as a hydrocarbon-based MEA) have corresponding advantages and disadvantages.

Nafion-based MEAs have an advantage of maintaining a temperature adequate for the fuel cell reaction to proceed, which is an exothermic reaction. However, a Nafion-based MEAs often have a disadvantage in requiring a separate mixing tank for producing diluted fuel by mixing water from the emissions of the fuel cell stack with a high-concentration fuel because a high concentration fuel cannot be used due to methanol crossover.

The hydrocarbon-based MEA may use high-concentration fuel because the methanol crossover is lower, which reduces the volume of the overall system. However a hydrocarbon-based MEA often requires a separate heating device to obtain the temperature for the fuel cell reaction.

Japanese Laid-Open Patent Publication No. 2006-073235 describes an arrangement to supplement the above mentioned disadvantages of Nafion-based MEAs and hydrocarbon-based MEAs in which Nafion-based electrolyte membranes are disposed on both surfaces of a hydrocarbon-based electrolyte membrane. Therefore, methanol crossover is effectively prevented by the hydrocarbon-based electrolyte membrane and an adequate temperature is secured by the Nafion-based electrolyte membrane.

However, according to this arrangement, a triple-layer electrolyte membrane substitutes for the typical single-layer electrolyte membrane and the volume of the MEA is increased, and if the triple-layer electrolyte membrane is formed thin then the manufacturing cost will considerably increase.

The present disclosure resolves the above-mentioned problems, and an object is to provide a fuel cell stack and a fuel cell system with the same preventing the crossover of the fuel cost-effectively, while maintaining a temperature, which is adequate for the fuel cell reaction.

Another object is to provide a fuel cell stack and a fuel cell system with the same having more efficient performance as different properties are harmonized in the MEA.

Some embodiments provide a fuel cell stack comprising two different types of MEAs, each with certain advantages over the other. The concept is applicable to various types of fuel cells and is described in detail for a direct methanol fuel cell stack, which comprises fluorine-based and hydrocarbon-based MEAs. Fluorine-based MEAs typically achieve the operating temperature for the fuel-oxidant redox reaction easily, but suffer from significant methanol crossover, thereby wasting fuel. Hydrocarbon-based MEAs typically exhibit little methanol crossover, but do not reach operating temperature easily. The MEAs are arranged such that the heat generated in the fluorine-based MEAs brings the hydrocarbon-based MEAs to operating temperature. The two types of MEAs may be arranged so that each one of each type alternates, so that groups of one or both types alternate, or in other arrangements. In some embodiments, the number of fluorine-based MEAs is minimized, thereby improving fuel efficiency. Preferably, the ends of the stack comprise fluorine-based MEAs to maintain the temperature.

Embodiments of the fuel cell stack comprise a multitude of membrane-electrode assemblies are stacked with a separator interposed, with the MEA having an anode and a cathode of a first property, and the MEA having an anode electrode and a cathode electrode of a second property are stacked, and preferably it may be embodied that the MEA having the first property is a hydrocarbon-based MEA and the MEA having the second property is a fluorine-based MEA.

A variety of electrolyte membranes are proposed to embody the fuel cell MEA; however there is no prevailing electrolyte membrane considering the cost and the performance, and each electrolyte membrane has own advantages and disadvantages. The electrolyte membranes of multi-layer structure are introduced to minimize the disadvantages and to maximize the advantages, however they are expensive.

In some embodiments, the structure the fuel cell stack comprises alternately stacking more than two kinds of MEA (that is, each of membrane-electrode assemblies with different properties) when the stack is manufactured with the MEA composed of various electrolyte membranes having their own advantages and disadvantages.

Compared with the multi-layer structure MEA discussed above, some embodiments of the fuel cell stack comprise two kinds of membrane-electrode assemblies comprising a cathode electrode electrolyte membrane and an anode electrode electrolyte membrane.

Some embodiments provide a fuel cell stack and a fuel cell system comprising the fuel cell stack, the fuel cell stack comprising: a plurality of membrane-electrode assemblies (MEAs) stacked together with a separator interposed between adjacent membrane-electrode assemblies, wherein the plurality of MEAs comprises: at least one MEA of a first property comprising an anode electrode and a cathode electrode; and at least one MEAs of a second property comprising an anode electrode and a cathode electrode.

In some embodiments, the MEA of the first property comprises a hydrocarbon-based MEA, and the MEA of the second property comprises a fluorine-based MEA. In some embodiments, a predetermined number of hydrocarbon-based MEAs and a predetermined number of fluorine-based MEA are alternately stacked. In some embodiments, at least one fluorine-based MEA is interposed between two hydrocarbon-based MEA, and a fluorine-based MEA is positioned at each end of the fuel cell stack. In some embodiments, fluorine-based MEAs are positioned at each end of the fuel cell stack and the hydrocarbon-based MEA in the middle of the fuel cell stack.

In some embodiments, the stack comprises at least one of a set of consecutive fluorine-based MEAs and a set of consecutive hydrocarbon-based MEAs. In some embodiments, the fluorine-based MEA comprises a membrane comprising at least one of a poly(purfluorosulfonic acid), a fluorocarbon vinyl ether, and a fluorovinyl ether. In some

embodiments, the hydrocarbon-based MEA comprises a membrane comprising at least one of a polystyrene, a polybenzimidazole, a polyimide, a polyetherimide, a polyphenylene sulfide, a polysulfone, a polyethersulfone, a polyetherketone, a polyether-ether ketone, and a polyphenylquinoxaline. In some embodiments, the hydrocarbon-based MEA comprises a membrane comprising at least one of polybenzimidazole, polyimide, polysulfone, a polysulfone derivative, sulfonated-poly(ether ether ketone (s-PEEK), poly(phenyleneoxide), poly(phenylenesulfide), polyphosphazene, sulfonated polyethersulfone (PES), sulfonated polyimide (PI) membrane, and polytetrafluoroethylene/polyvinylidenefluoride-hexafluroprophylene-graft-polystyrene copolymer (PTFE/PVDF-HFP-g-PS).

In some embodiments, the hydrocarbon-based MEA comprises a membrane comprising at least one of a benzimidazole, a polyimide, a polyetherimide, a polyphenylene sulfide, a polysulfone, a polyethersulfone, a polyetherketone, a polyether-etherketone, and a polyphenylquinoxaline. In some embodiments, the hydrocarbon-based MEA comprises a membrane comprising at least one of polybenzimidazole, polyimide, polysulfone, a polysulfone derivative, sulfonated-poly(ether ether ketone (s-PEEK), poly(phenyleneoxide), poly(phenylenesulfide), and polyphosphazene.

Some embodiments of the fuel cell system further comprise: a fuel tank fluidly connected to the fuel cell stack, configured for storing fuel supplied to the fuel cell stack; and a power transmission interface electrically coupled to the fuel cell stack, configured for transmitting electrical energy generated by the fuel cell stack to an external load.

In some embodiments, the fuel cell stack is configured to exhaust emissions generated at the cathode into the ambient environment.

Some embodiments further comprise a fuel pump fluidly connecting the fuel tank and the fuel cell stack, configured for feeding fuel stored in the fuel tank into the fuel cell stack.

The above and other objects, features and advantages will be more apparent from the following detailed description taken in conjunction with the accompanying drawings, in which:

FIG. 1 is an exploded view illustrating a detailed structure of an embodiment of a fuel cell stack.

FIGS. 2A to 2C are cross sectional views illustrating exemplary embodiments of the fuel cell stack having the alternately stacked structure.

FIG. 3 is a block diagram illustrating the construction of the fuel cell system embodied in the fuel cell stack illustrated in FIG. 2C.

FIG. 4 is a graph illustrating test results of fuel cell stacks whose one stack has the alternately stacked structure and the other stack does not has.

Hereinafter, preferred embodiments will be described with reference to the accompanying drawings. The preferred embodiments are provided so that those skilled in the art can sufficiently understand the disclosure, but can be modified in various forms, and the scope thereof is not limited to the preferred embodiments.

For example, even though the following embodiments describe a direct methanol fuel cell using an electrolyte membrane comprising a fluorine-based electrolyte membrane and a hydrocarbon-based electrolyte membrane, which improves the performance thereof, the arrangement may by applied to any type of fuel cell stack.

Before describing embodiments of a fuel cell stack, the fluorine-based electrolyte membrane and the hydrocarbon-based electrolyte membrane will be explained, which are widely used to produce direct methanol fuel cell MEAs.

Embodiments of a fluorine-based electrolyte membrane, as a hydrogen ion conductive polymer, comprises a perfluorinated alkylene backbone that is partially substituted with positive ion exchange groups, such as sulfonic acid groups, and carboxylic acid groups at the end of fluorinated vinyl ether side chains. This polymer is referred to a persulfonic acid resin. A fluorine-based electrolyte membrane comprising the persulfonic acid resin is referred to as a Nafion-based electrolyte membrane herein after a name of the ion conductive polymer.

A perfluorosulfonic acid resin membrane comprising a perfluorosulfonic acid resin (Nafion®, DuPont) having good conductivity, mechanical physical properties, and chemical resistance is often used as a fluorine-based electrolyte membrane. As the thickness of the perfluorosulfonic acid resin membrane increases, the dimensional stability, mechanical physical properties, and membrane resistance of the resin membrane also increase. However, as the thickness of the perfluorosulfonic acid resin membrane decreases, the membrane resistance of the resin membrane decreases, as well as the mechanical physical properties and the fuel vapor and liquid permeation of the polymer membrane, thereby resulting in a loss of fuel and a reduction in the performance of the fuel cell.

Hydrocarbon-based electrolyte membranes have been used in various kinds of fuel cells such as polymer electrolyte membrane fuel cells, and are currently being applied to direct methanol fuel cells.

Some embodiments of hydrocarbon-based electrolyte membranes comprise a hydrogen ion conductive polymer based on a heat resistant aromatic hydrocarbon-based polymer such as polystyrene, polybenzimidazole, polyethersulfone, and polyetherether ketone. In some embodiments, the membrane comprises a hydrocarbon-based sulfonated polyimide (PI) membrane, a polyetherether ketone (PEEK) membrane, a sulfonated polyethersulfone (PES) membrane, a sulfonated polybenzimidazole membrane; a premier membrane, which is complex membrane, and/or a polytetrafluoroethylene/polyvinylidenefluoride-hexafluroprophylene-graft-polystyrene copolymer (PTFE/PVDF-HFP-g-PS) membrane. A typical MEA-Separator stacked structure of a fuel cell stack will now be described. Referring to FIG. 1, a typical fuel cell stack comprises a plurality of membrane-electrode assemblies (MEAs) comprising electrolyte membranes 1, an anode electrode 2, a cathode electrode 3, and a separator 5. The electrolyte membrane 1 is interposed between the anode electrode 2 and the cathode electrode 3. The separator 5 is interposed between the membrane-electrode assemblies (MEAs).

Although only two MEAs are illustrated in FIG. 1, a multitude of MEAs 1, 2, 3 and separators 5 are alternately stacked in typical embodiments, with the membrane-electrode assemblies at both ends provided with a half separators 5a, 5b and end plates 6a, 6b. The separators 5, 5a, 5b have channels al, a2 for through which fuel and oxidant flow.

As shown in the drawing, an MEA is formed by attaching an anode electrode 2 and an cathode electrode 3 to opposite sides of a polymer electrolyte membrane 1. Each anode electrode 2 and cathode electrode 3 comprises generally a metal catalyst layer 2a, 3a and a diffusion layer 2b, 3b, respectively.

The fuel cell stack is completed by fixing the end plates 6a, 6b with connecting member 7 under predetermined pressure with an end plate 6a, 6b arranged on each end of the stacked structure, and alternately stacked MEAs 1, 2, 3, gaskets 4, and separators 5, 5a, 5b therebetween.

The fuel cell stack according to the embodiments of FIGS. 2A to 2C comprises stacked fluorine-based MEAs and hydrocarbon-based MEAs. A separator is interposed between the MEAs, as described in FIG. 1, although only the MEAs are illustrated in FIGS. 2A to 2C.

There are various methods for stacking two kinds of MEAs, and several exemplary methods are as follows. There may be a first method of FIG. 2A in which stacks of one or several fluorine-based MEAs are arranged at both ends of the fuel cell stack, and a stack of hydrocarbon-based MEAs is arranged in the middle of the fuel cell stack. As discussed above, embodiments of fluorine-based MEAs exhibit desirable temperature characteristics, while hydrocarbon-based MEAs exhibit low crossover. In a second method illustrated in FIGS. 2B and 2C, a predetermined number of fluorine-based MEAs and hydrocarbon-based MEAs are alternately arranged in the fuel cell stack.

In some embodiments of the second method, it is preferable that fluorine-based MEAs are positioned at both ends of the fuel cell stack, and it is possible that one fluorine-based MEA and one hydrocarbon-based MEA are alternately stacked as shown in Fig. 2B, or one fluorine-based MEA and a set of two hydrocarbon-based MEAs are alternately stacked as in FIG. 2C. In the latter case, there is an advantage in that a hydrocarbon-based MEA is positioned on both sides of the fluorine-based MEA, thereby securing the operating temperature of the fuel cell as well as increasing the ratio of the hydrocarbon-based MEAs exhibiting low crossover against the fluorine-based MEA to 2:1. Those skilled in the art will understand that other stacking arrangements of fluorine-based MEAs and hydrocarbon-based MEAs are used in other embodiments.

The fuel is supplied to the anode and the air (oxygen) is supplied to the cathode of the fluorine-based MEA and hydrocarbon-based MEA as shown in FIG. 1. In the initial starting stage the operation of the fuel cell, sufficient electricity is generated in the fluorine-based MEAs, in which heat is produced by an exothermic reaction between the fuel and oxidant; however, electricity is not generated in the hydrocarbon-based MEAs, which do not reach a sufficient reaction temperature at the initial stage. However, the hydrocarbon-based MEA rapidly reaches the desired reaction temperature from the heat generated by the proximal fluorine-based MEAs, thereby generating sufficient electricity in the hydrocarbon-based MEA from that moment on.

In relation to the efficiency of the fuel cell according to the present embodiment, the methanol crossover is significantly decreased compared with embodiments in which the stack comprises on fluorine-based MEAs, because the ratio of the fluorine-based MEAs, which typically exhibit high methanol crossover, to hydrocarbon-based MEAs decreases. And, for minimizing the methanol crossover, it is preferable to reduce or minimize the number of the fluorine-based MEAs in the fuel cell stack and to increase the thickness of the membrane of the fluorine-based MEA. In the illustrated embodiment, the overall thickness of the fuel cell stack is not increased much since the number of the fluorine-based MEAs is relatively small.

As a positive ion exchange resin having hydrogen ion conductivity, any suitable polymer resin having a positive ion exchange group selected from the group consisting of sulfonic acid radical, carboxylic acid radical, phosphoric acid radical, phosphonic acid radicals, and derivatives thereof may be used.

Representative examples of suitable positive ion exchange resin having hydrogen ion conductivity include at least one hydrogen ion conductive polymer selected from the group consisting of fluorine-based polymers, benzimidazole-based polymers, polyimide-based polymers, polyetherimide-based polymers, polyphenylene sulfide-based polymers, polysulfone-based polymers, polyethersulfone-based polymers, polyetherketone-based polymers, polyether-etherketone-based polymers, polyphenylquinoxaline-based polymers, and the like. Some preferred embodiments comprise a at least one of a fluorine-based polymer, a polybenzimidazole-based polymer, and a polysulfone-based polymer.

Examples of suitable fluorine-based polymers include poly(purfluorosulfonic acids) including Nafion®, (E.I. Dupont de Nemours), Aciplex® (Asahi Kasei Chemical), Flemion® (Asahi Glass), and Fumion® (Fumatech) of FORMULA 1; fluorocarbon vinyl ethers of FORMULA 2; and/or fluorovinyl ethers of FORMULA 3. Or, it is possible to use the polymers described in US Patent Nos. 4,330,654, 4,358,545, 4,417,969, 4,610,762, 4,433,082, 5,094,995, 5,596,676 and/or

4,940,525.

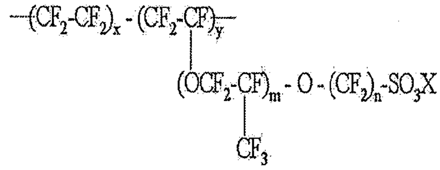

FORMULA 1

In the FORMULA 1, *X* is H, Li, Na, K, Cs, tetrabutylammonium, and/or $NR^1R^2R^3R^4$, where $R^1$, $R^2$, $R^3$, and $R^4$ are independently H, $CH_3$, or $C_2H_5$; *m* is 1 and above; n is 2 and above; x is from about 5 to about 3.5; and y is about 1,000 and above.

$$MSO_2CFR_FCF_2O[CFYCF_2O]_NCF{=}CF_2 \qquad \text{FORMULA 2}$$

In the FORMULA 2, $R_f$ is fluorine or a perfluoroalkyl radical of from about $C_1$ to about $C_{10}$; *Y is* fluorine or trifluoromethyl radical; n is an integer of from about 1 to about 3; M is fluorine, hydroxyl radical, amino radical, or -O*Me*, where Me is selected from the group consisting of alkali metal radicals and quaternary ammonium radicals.

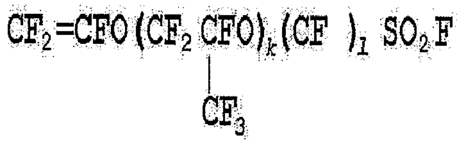

FORMULA 3

In the FORMULA 3, *k* is 0 or 1; and *l* is integer of from about 3 to about 5.

Embodiments of Nafion® poly(perfluorosulfonic acid) with the structure of FORMULA 1 have a micelle structure when sulfonic acid radical at the end of the chain, and provide a channel for moving the hydrogen ion, behaving like the typical aqueous solution acid. In cases in which Nafion® is used as a purfluorosulfonic acid positive ion exchange resin, *X* may be replaced with univalent ion such as hydrogen, sodium, potassium cesium, and/or tetrabutylammonium at the ion exchange side chain end ($-SO_3X$).

And, specific examples of a benzimidazole-based polymers, polyimide-based polymers, polyetherimide-based polymers, polyphenylene-sulfide based polymers, polysulfone-based polymers, polyethersulfone-based polymers, polyetherketone-based polymers, polyether-etherketone-based polymers, and polyphenylquinoxaline-based polymer, include polybenzimidazole, polyimide, polysulfone, polysulfone derivatives, sulfonated-poly(ether ether ketone (s-PEEK), poly(phenyleneoxide), poly(phenylenesulfide), polyphosphazene, and the like.

Further, it is possible to use an electrolyte in which a polystyrene sulfonic acid polymer is grafted to a monomer such as ethylene, propylene, fluoroethylene, ethylene/tetrafluoroethylene, and the like.

The positive ion exchanging resin having hydrogen ion conductivity may control the hydrogen ion conductivity according to the equivalent weight. Meanwhile, "the ion-exchange ratio of the ion exchanging resin" is determined by the number of carbon and positive ion exchanger groups of the polymer backbone, and in some embodiments, it is preferable that ion exchanging resin has the ion-exchange ratio of from about 3 to about 33, which corresponds to an equivalent weight (EW) of from about 700 to about 2,000.

The thickness of the electrolyte membrane may be from about 500 μm to about 5 μm, preferably, from about 200 μm to about 10 μm. The concentration of the methanol fuel may be at least about 0.01 M, more preferably, from about 10 M to about 0.2 M.

FIG. 3 illustrates an embodiment of a fuel cell system comprising an embodiment of the fuel cell stack described above. The illustrated system directly supplies a relatively high density fuel to the fuel cell stack and exhausts cathode emissions into the air, and thus the volume is significantly reduced compared with the volume of a direct methanol fuel cell system having a compressor, for compressing the cathode emissions, and a fuel mixing tank.

The fuel cell system, having the structure in which an MEA (e.g., a fluorine-based MEA) of a first property with an anode and a cathode, and an MEA (e.g., a hydrocarbon-based MEA) of a second property with an anode electrode

and a cathode electrode are stacked, comprises a fuel cell stack 110 generating electrical energy through the electrochemical reaction between hydrogen and oxygen; a fuel tank 120 storing the fuel supplied into the fuel cell stack; and a power transmission interface 160 for transmitting the electrical energy generated in the fuel cell stack 110 to an external load.

According to the embodiment, the fuel cell system may further include a fuel pump 140 feeding the fuel stored in the fuel tank 120 into the anode electrode 110 of the fuel cell stack 110 and/or a blowing means 150 for blowing outside air into the fuel cell stack 110. Here, it is preferable that the fuel pump 140 is miniature pump such as diaphragm pump to reduce the volume of the system. Meanwhile, the blowing means 150 may be embodied as an air pump or blowing fan.

In the fuel tank 120, slightly diluted methanol, which is not 100% methanol, is stored in the fuel tank 120, since the MEAs of the fuel cell stack use an appropriate amount of water to achieve the desired ion conductivity.

The power transmission interface 160 stabilizes the power generated in the fuel cell stack 110, and/or converts the current/voltage and transmits it to an external load 200, and may comprise a DC to DC power rectifier or DC to AC power rectifier for preventing high voltage from being applied into the external load 200.

And, the fuel cell system may further include a secondary battery 180 for storing the power generated in the fuel cell stack 110, and a driving controller 170 for controlling the fuel pump 140 and/or the blowing means 150 depending on the state of electric generation. Here, the electrical power for the driving controller 170, the fuel pump 140, and/or the blowing means 150 may be supplied from the power transmission interface 160 and/or the secondary battery 180.

The fuel cell stack 110 has a structure comprising fluorine-based MEAs and the hydrocarbon-based MEAs alternately stacked, and therefore the efficiency of power generation is high and the fuel cell reaction temperature is rapidly reached even if the fuel supplied from the fuel tank 120 has a relatively high concentration.

FIG. 4 is a graph illustrating test results of three fuel cell stacks whose one stack has the alternately stacked structure and the other stacks do not have. In FIG. 4, A first stack A has a structure stacked only fluorine-based MEAs, a second stack B has a structure stacked only the hydrocarbon-based MEAs, and a third stack C has a structure comprising the fluorine-based MEAs and the hydrocarbon-based MEAs stacked as shown in FIG. 2C. The three stacks were operated under conditions that the stoichiometry quantity of methanol fuel supplied to the stacks is 3. Here, the methanol was 1 mole of methanol solution. And then, current and voltage of each of the three stacks were measured at about 65° of operation temperature.

As shown in FIG. 4, the voltage of the first stack A is low than that of the second stack B in the range under about 100mA/cm$^2$. It is because fuel crossover of the membrane used in the stack A is greater than that of the membrane used in the stack B when output current of the stack is low. Furthermore, because of the great fuel crossover, faradic efficiency of the stack A is lower than that of the stack B. The faradic efficiency represents fuel utilization of one mole of methanol fuel. In test results, the faradic efficiencies of the stacks A, B and C were about 85%, 71% and 82%, respectively. And, the faradic efficiency of the third stack C according to the present embodiment was obtained near that of the second stack B having the greatest faradic efficiency.

The first stack A represented about 170 mA/cm$^2$ at about 8.45V, the second stack B represented about 110 mA/cm$^2$ at about 8.45V, and the third stack C represented about 180 mA/cm$^2$ at about 8.45V. Here, 8.45V is an operation voltage in normal state of the stacks and the voltage can be changed according to the number of MEAs used in the stack. According to the test results, the third stack C has high operation voltage in operation range that the output current of the stack C is not more than 100mA/cm$^2$ and the characteristic current-voltage good in operation range that the output current of the stack C is more than 100 mA/cm$^2$.

Furthermore, the first stack A and the second stack B have a point where a voltage suddenly and lowly changes near about 200mA/cm$^2$ due to mass transfer loss inside the stacks A and B, but the third stack C does not have the point. Thus, the third stack C has advantages that the operation control is easy and the stability is high in comparison with the stacks A and B.

It is possible to improve the performance of the fuel cell stack as the respective properties of each MEA are harmonized by implementing the fuel cell stack and the fuel cell system having the same as described above.

In detail, it is possible to effectively reduce or prevent the crossover of the fuel and to achieve a temperature adequate for the fuel cell reaction at a low cost by implementing the fuel cell stack in which fluorine-based MEAs and hydrocarbon-based MEAs are alternately stacked.

And, it is possible to achieve the one or more of the above advantages without increasing the volume of the stack, since the electrolyte membrane may be single layer.

Further, it is possible to reduce or minimize the volume of the fuel cell system by omitting the compressor and the mixing tank.

While certain embodiments been particularly shown and described, it will be understood by those of ordinary skill in the art that various changes in form and details may be made therein without departing from the scope of the present disclosure as defined by the following claims.

## Claims

1. A fuel cell stack comprising:

   a plurality of membrane-electrode assemblies (MEAs) stacked together with a separator interposed between adjacent membrane-electrode assemblies, wherein the plurality of MEAs comprises:

      at least one MEA of a first property comprising an anode electrode and a cathode electrode; and
      at least one MEAs of a second property, different to the first property, and comprising an anode electrode and a cathode electrode.

2. The fuel cell stack as claimed in claim 1, wherein the MEA of the first property comprises a hydrocarbon-based MEA, and the MEA of the second property comprises a fluorine-based MEA.

3. The fuel cell stack as claimed in claim 2, wherein a predetermined number of hydrocarbon-based MEAs and a predetermined number of fluorine-based MEA are alternately stacked.

4. The fuel cell stack as claimed in claim 3, wherein at least one fluorine-based MEA is interposed between two hydrocarbon-based MEA, and a fluorine-based MEA is positioned at each end of the fuel cell stack.

5. The fuel cell stack as claimed in claim 2, wherein fluorine-based MEAs are positioned at each end of the fuel cell stack and the hydrocarbon-based MEA in the middle of the fuel cell stack.

6. The fuel cell stack as claimed in claim 3, wherein the stack comprises at least one of a set of consecutive fluorine-based MEAs and a set of consecutive hydrocarbon-based MEAs.

7. The fuel cell stack as claimed in any of claims 2 to 6, wherein the fluorine-based MEA comprises a membrane comprising at least one of a poly(purfluorosulfonic acid), a fluorocarbon vinyl ether, and a fluorovinyl ether.

8. The fuel cell stack as claimed in any of claims 2 to 7, wherein the hydrocarbon-based MEA comprises a membrane comprising at least one of a polystyrene, a polybenzimidazole, a polyimide, a polyetherimide, a polyphenylene sulfide, a polysulfone, a polyethersulfone, a polyetherketone, a polyether-ether ketone, and a polyphenylquinoxaline.

9. The fuel cell stack as claimed in claim 8, wherein the hydrocarbon-based MEA comprises a membrane comprising at least one of polybenzimidazole, polyimide, polysulfone, a polysulfone derivative, sulfonated-poly(ether ether ketone (s-PEEK), poly(phenyleneoxide), poly(phenylenesulfide), polyphosphazene, sulfonated polyethersulfone (PES), sulfonated polyimide (PI) membrane, and polytetrafluoroethylene/polyvinylidenefluoride-hexafluropropylene-graft-polystyrene copolymer (PTFE/PVDF-HFP-g-PS).

10. A fuel cell system, comprising:

    the fuel cell stack of any preceding claim;
    a fuel tank fluidly connected to the fuel cell stack, configured for storing fuel supplied to the fuel cell stack; and
    a power transmission interface electrically coupled to the fuel cell stack, configured for transmitting electrical energy generated by the fuel cell stack to an external load.

11. The fuel cell system as claimed in claim 10, wherein the fuel cell stack is configured to exhaust emissions generated at the cathode into the ambient environment.

12. The fuel cell system as claimed in claim 10 or claim 11, further comprising a fuel pump fluidly connecting the fuel tank and the fuel cell stack, configured for feeding fuel stored in the fuel tank into the fuel cell stack.

FIG. 1

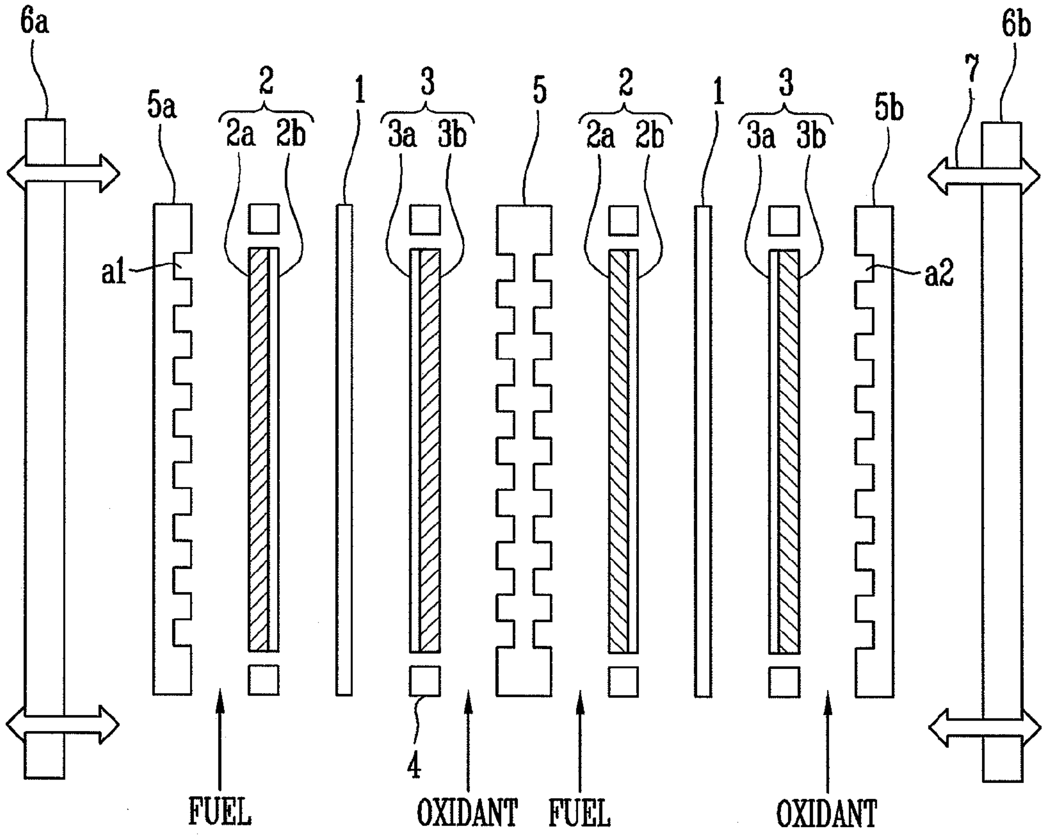
6a
5a
2
2a 2b
1
3
3a 3b
5
2
2a 2b
1
3
3a 3b
5b
7
6b
a1
a2
4
FUEL
OXIDANT
FUEL
OXIDANT

FIG. 2A

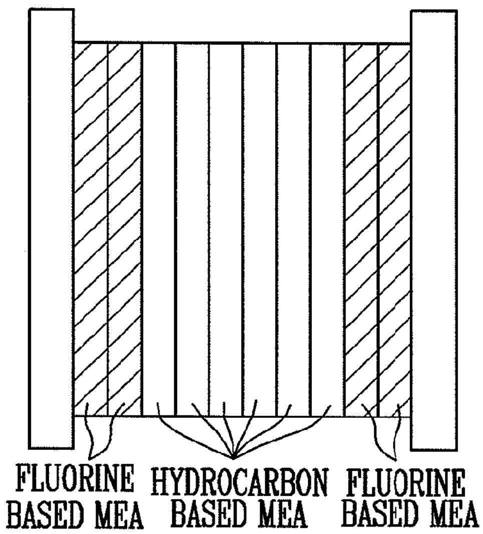
FLUORINE BASED MEA
HYDROCARBON BASED MEA
FLUORINE BASED MEA

FIG. 2B

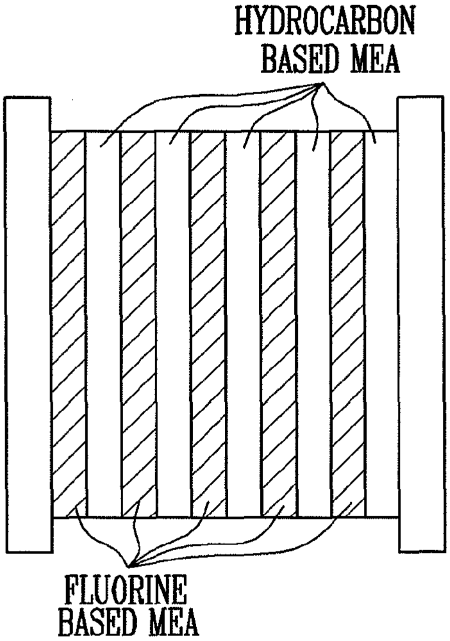
HYDROCARBON
BASED MEA
FLUORINE
BASED MEA

FIG. 2C

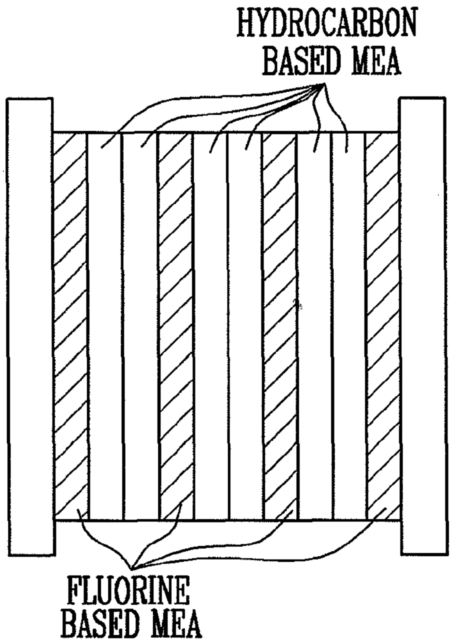
HYDROCARBON
BASED MEA
FLUORINE
BASED MEA

FIG. 3

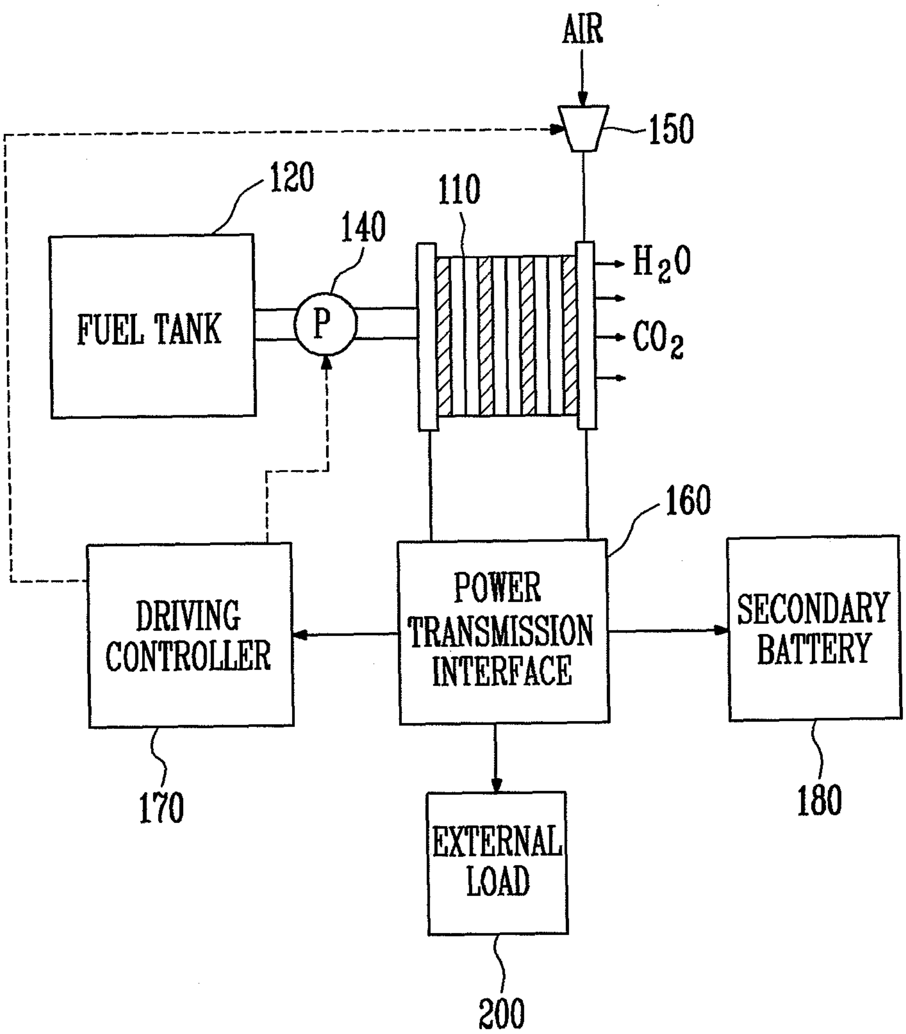
AIR
150
120
110
140
FUEL TANK
P
H2O
CO2
160
DRIVING CONTROLLER
POWER TRANSMISSION INTERFACE
SECONDARY BATTERY
170
180
EXTERNAL LOAD
200

FIG. 4

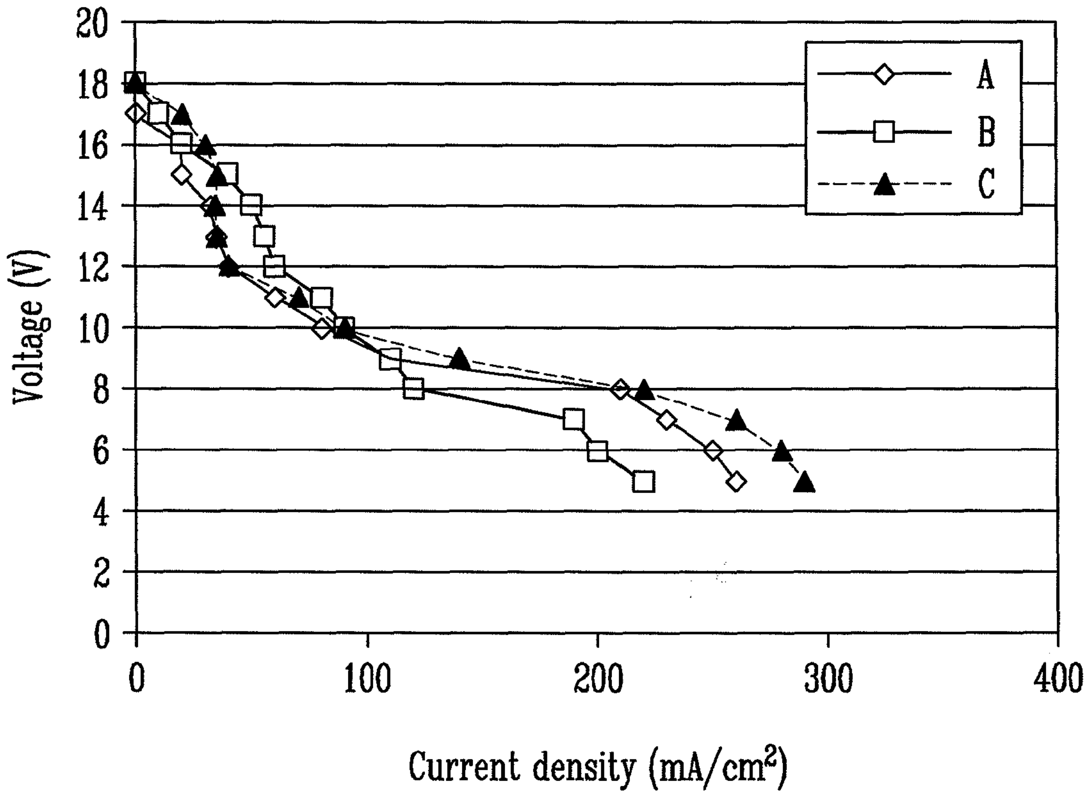
20
18
16
14
12
10
8
6
4
2
0
Voltage (V)
0
100
200
300
400
Current density (mA/cm2)
A
B
C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006073235 A
- US 4330654 A
- US 4358545 A
- US 4417969 A
- US 4610762 A
- US 4433082 A
- US 5094995 A
- US 5596676 A
- US 4940525 A